# EUROPEAN PATENT APPLICATION

(11) **EP 3 378 549 A1**
(43) Date of publication of application: **26.09.2018**
(21) Application number: 18162542.7
(22) Date of filing: 19.03.2018
(51) Int. Cl.: B01D 36/04, B01D 29/90, F02M 37/22

(54) **DIESEL FUEL FILTER**

(30) Priority: 20.03.2017 GB 201704366
(71) Applicant: Delphi Technologies IP Limited, Saint Michael (BB)
(72) Inventor: McHATTIE, James T., Bean, Kent DA2 8AL (GB)
(74) Representative: Delphi France SAS

(57) **Abstract**

A diesel fuel filter (20) adapted to be arranged upstream the high pressure pump (10), said filter (20) having a cold path and a warm path wherein, at cold temperature the fuel is filtered in the cold path, said cold fuel bypassing the warm path and, at warm temperature the fuel is filtered in the warm path, said warm fuel bypassing the cold path.

## Description

### TECHNICAL FIELD

The present invention relates to a diesel fuel filter adapted to be arranged upstream the high pressure circuit of a fuel injection equipment of an internal combustion engine, said filter being operational in cold and in warm temperature environment.

### BACKGROUND OF THE INVENTION

It is commonly known that on one hand, diesel fuel contains wax and, on another hand that fuel may contain debris and particles which severely damage a fuel injection equipment. The wax solidifies when the ambient temperature falls below a wax temperature and clogs the diesel fuel filter in cold start conditions. It is of utmost importance that said fuel is filtered whether in cold temperature or in warm temperature during normal operation.

Fuel injection equipment have been designed wherein a diesel fuel filter is bypassed at cold start and is only operational under warm conditions, non-filtered diesel fuel entering the system in cold start. Other complex and expensive solutions have been developed wherein cold filtering is degraded to allow fuel passage at cold start.

### SUMMARY OF THE INVENTION

Accordingly, it is an object of the present invention to resolve the above mentioned problems in providing a diesel fuel filter adapted to be arranged upstream the high pressure pump of a fuel injection equipment of an internal combustion engine, said filter having an filter inlet to an filter outlet between which extend a cold path and a warm path. Advantageously, at cold temperature the fuel is filtered in the cold path, said cold fuel bypassing the warm path and, at warm temperature the fuel is filtered in the warm path, said warm fuel bypassing the cold path.

Also, the warm path contains a filter mesh, through which, in use, warm fuel flows and particles present in the fuel are trapped.

Also, between the filter inlet and the filter outlet the cold path defines a main conduit, dividing in a blind branch forming a trap.

Also, the main conduit comprises a curved portion from the outer area of which said blind branch extends.

Also, the filter has a body comprising peripheral walls enclosing an inner space inside housing the warm path, one of the peripheral walls being cylindrical and extending about a filter axis from a first end to an opposed second end.

In an embodiment, the filter mesh is cylindrical and is arranged in the inner space against the inner face of the cylindrical wall.

Also, the main conduit of the cold path is a helical groove dug in the inner face of the cylindrical peripheral wall, so that it is open to said inner space, said groove developing around the inner space from an inner aperture arranged in the vicinity of the second end of the cylindrical wall to a groove outlet opening in the inner space and arranged in the vicinity of the first end of the cylindrical wall.

Also, the groove has a cross section semi-circular or triangular or otherwise polygonal, a side of said cross-section opening in the inner space.

Also, the trap comprises an ejection slot opening in the bottom of the helical groove and extending through the cylindrical wall toward an opening in a blind collection chamber partially defined by the outer face of the wall.

Also, the diesel fuel filter comprises a plurality of said trap.

Also, the filter inlet defines an inlet conduit extending in the cylindrical wall from an outer opening arranged in the vicinity of the first end of the cylindrical wall and through which the fuel enters the filter to an inner aperture arranged in the vicinity of the second end of the cylindrical wall, the cold path and the warm path joining said inner aperture.

In another embodiment, the filter body comprises a transverse wall wherein the main conduit of the cold path is a groove dug in said transverse wall so that it is open to the inner space.

Also, the filter inlet and the filter outlet are both provided in said transverse wall, said groove having the shape of a flat spiral extending between said filter inlet and outlet.

Also, the filter inlet is at the outward end of the spiral and, the filter outlet is at inward end of the spiral.

Also, said blind branch forming trap is a short groove outwardly diverging from the spiral main groove. Also, the diesel fuel filter comprises a plurality of said short grooves forming traps.

Furthermore, the diesel fuel filter comprises a magnetic trap, for collecting ferrous debris present in the fuel.

Said magnetic trap, comprises a member extending in said inner space.

The invention further extends to a high pressure fuel pump arranged in a diesel fuel injection equipment to receive low pressure fuel and to deliver pressurised fuel to a high pressure manifold distributing the fuel to injectors. The pump defines a compression chamber wherein low pressure fuel enters via an inlet orifice controlled by an inlet valve and wherefrom pressurised fuel is expelled via an outlet orifice controlled by an outlet valve. The pump further comprises a diesel fuel filter as previously described, said diesel fuel filter being fixed on an outer face of the body of the pump just upstream the inlet orifice.

### BRIEF DESCRIPTION OF THE DRAWINGS

The present invention is now described by way of example with reference to the accompanying drawings in which:
Figures 1 and 2 are schematic diagrams of a diesel fuel injection equipment wherein are arranged in two different locations a fuel filter of the invention.
Figure 3 is a section of a high pressure pump over which is arranged the diesel fuel filter.
Figure 4 is a section of a first embodiment of a filter of the invention.
Figures 5 and 6 are two 3D partial views of a cold filter of figure 4.
Figure 7 is a transverse section of the filter of figure 4.
Figure 8 is a top view of a cold filter of a second embodiment of the filter.
Figure 9 is a 3D view of the filter of figure 8.

### DESCRIPTION OF THE PREFERRED EMBODIMENTS

A diesel fuel injection equipment comprises a high pressure pump 10 receiving low pressure fuel via an inlet channel 12 and delivering pressurised fuel via a pump outlet.

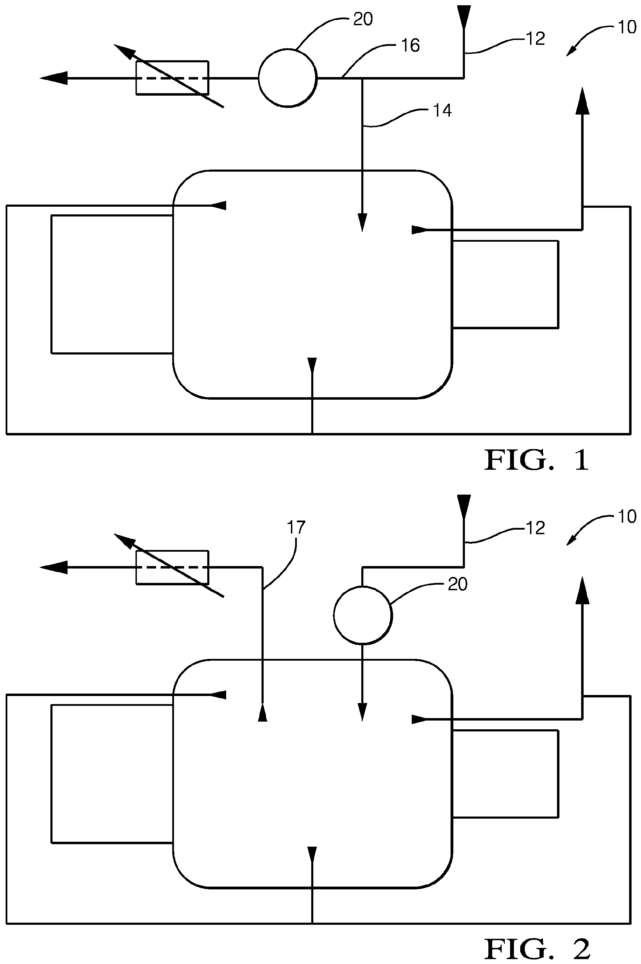

In a first arrangement shown in figure 1, the inlet channel 12 divides upstream the pump 10 into a first branch 14 joining a cambox of the pump and, a second branch 16 joining a compression chamber 18 wherein the fuel is pressurised. The equipment further comprises a diesel fuel filter 20 arranged on said second branch 16, just upstream the compression chamber presenting the advantage to only enable filtered fuel to enter the compression chamber.

In a second arrangement shown in figure 2, the inlet channel 12 does not divide and directly joins the cambox. The diesel fuel filter 20 is arranged in said inlet channel 12 while another channel 17 joins the cambox to the compression chamber 18.

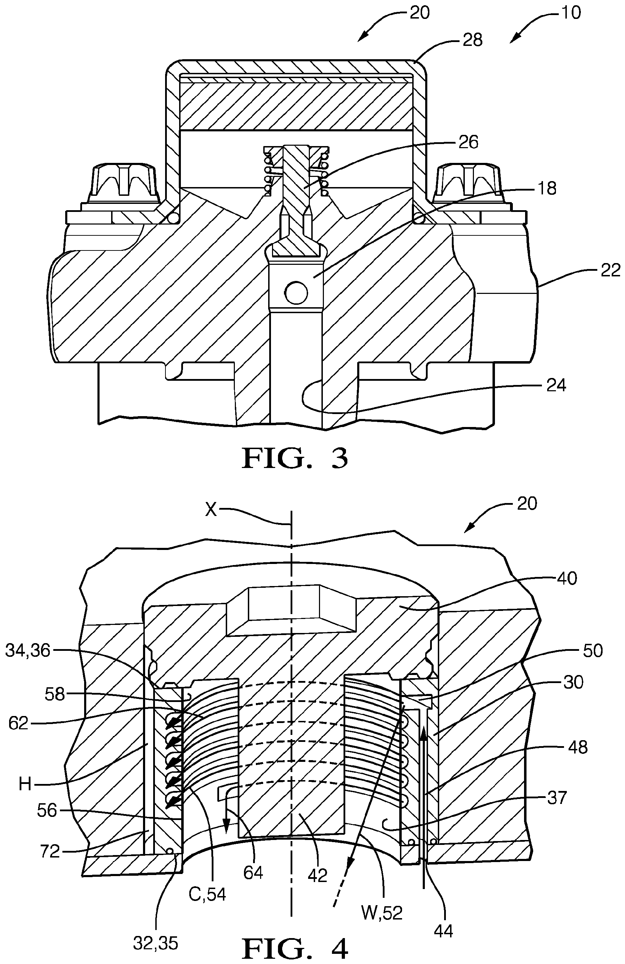

A section of the pump 10 is shown on figure 3 said pump having a pump body 22 defining a bore 24 in which a plunger, not shown, urged by a camshaft rotating in the cambox, reciprocally moves and varies the volume of the compression chamber 18 defined at the top end of the bore. The pump 10 further comprises an inlet valve 26 controlling entry of the fuel in said compression chamber. The diesel fuel filter 20 is fixed atop the pump just above in inlet valve 26 and it has a filter body 28 enclosing an inner space S through which fuel transfers prior to entering the compression chamber.

A first embodiment of the diesel fuel 20 filter is now described in reference to the figures 4, 5, 6 and 7 where it is shown that the filter body 28 comprises a cylindrical wall member 30 extending about a filter axis X from a bottom first end 32, to a top second end 34 respectively defining a bottom first annular face 35 and a top second annular face 36. In the entire text, words such "top, bottom, upward, over, under..." referring to the orientation of the figures may be used to ease, simplify and clarify the description without any intention to limit the scope of protection. Extending between said first 35 and second 36 faces, said wall member 30 defines a cylindrical inner face 37, that is also the peripheral face of the inner space S, and a cylindrical outer face 38. The filter further comprises a plug 40 adjusted over the top second face 36 and thus enclosing the inner space S, said plug 40 comprising a cylindrical magnetic trap 42 downwardly extending in the inner space S. The filter illustrating this first embodiment is inserted in a hollow H provided on the pump body 22.

The filter 20 has a filter inlet 44 having an arcuate shape, some kind of an oblong whose long sides are curved, arranged in the bottom first face 35 and, a filter outlet 46, not detailed and, arranged by the bottom first end 32 where, in figure 4, points an arrow W. Between said filter inlet 44 and filter outlet 46, the fuel firstly follows an inlet conduit 48 arranged within the thickness of said cylindrical wall 30, said conduit 48 extending in parallel to the filter axis X from said arcuate filter inlet 44 to an inner aperture 50 opening in the inner face of the cylindrical wall 30 and, at that point of inner aperture 50, the fuel follows a warm path 52 also identified in figure 4 by said arrow W or, a cold path 54 identified by an arrow C.

Following said warm path 52, from said inner aperture 50 the fuel flows through a 50µm filter mesh 56 arranged against the inner face 37 of the cylindrical wall then, inside the inner space S toward the filter outlet 46. The filter mesh 56 that is the key member of the warm path 52, has a cylindrical shape adjusted to be in contact against said wall inner face 37 and axially X extending from a cylindrical top end 58 positioned close or even against the plug 50, to an opposed cylindrical bottom end 60 close to the first end 32 of the wall. The 50µm mesh size is an indication of a preferred size region commonly used to trap particles present in a diesel fuel.

The cold path 54 also extends from said inner aperture 50 but follows a helical groove 62 dug in said wall inner face 37, making several revolutions around the inner space S until it reaches a groove outlet 64 opening in the bottom area of the inner space S. An aperture 66 is provided in the filter mesh 56 and arranged facing said groove outlet 64 thus enabling fuel flowing in the groove 62 to directly exit the groove, enter the inner space S and continue toward the filter outlet 46.

On figure 4, the groove 62 has a D-like semi-circular cross section and, it is dug in the wall inner face 37, the vertical straight back of the "D" being open to the inner space S and the circular front side being inside the wall. Alternatively, said groove 62 can be provided with another cross section such as a triangular similar to most threads, or rectangular or any polygonal profile.

Furthermore, a plurality of ejection slots 68 are arranged in the wall 30 extending from the bottom of the helical groove 62, the prominent semi-circular front side of the "D", to an opening 70 in the outer face 38 of the cylindrical wall where said slots 68 open in a blind collection chamber 72 defined between said wall outer face 38 and the peripheral face of the hollow H in which the filter is arranged. Also, as shown on the figures, several axial ribs 74 extending from said wall outer face 38 to ease the filter positioning in the hollow and contribute to delimit said chamber 72.

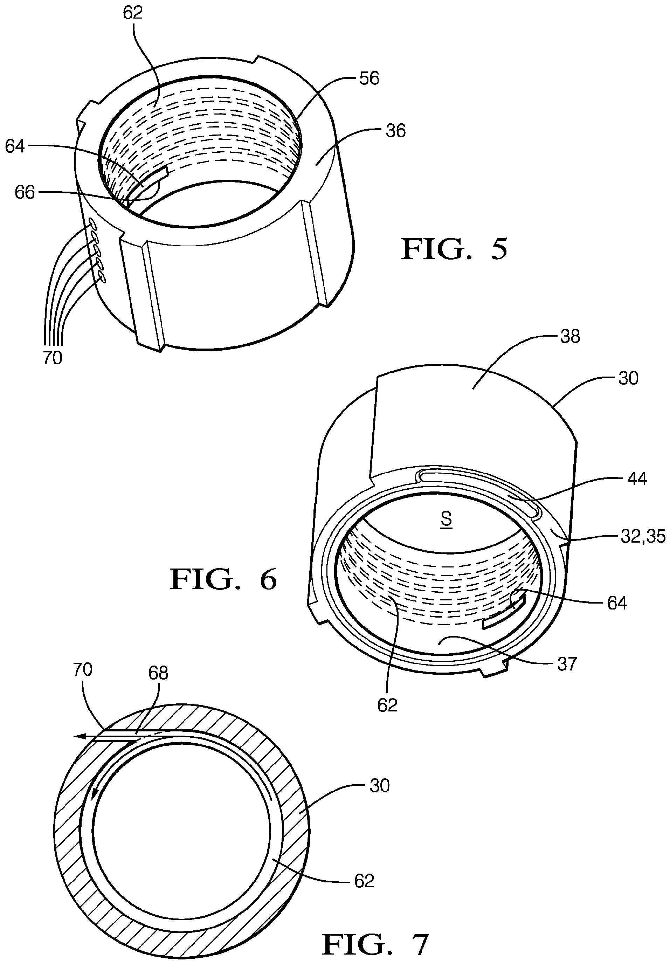

The ejection slots 68 can be drilled perpendicularly to the wall outer face 38 thus radially extend toward the groove 62 or, preferably as shown on the section of figure 7 where the slots 68 are drilled tangentially to the groove 62 so they open in the bottom of said groove and extend within the wall 30 in a direction, indicated by the arrow C68, in direct continuation to the flow direction, indicated by the curved arrow C 62, in the groove.

The operation of the filter 20 is now detailed. Whichever temperature condition is, diesel fuel enters the filter 20 via the filter inlet 44 and flows in the inlet conduit 48 to the inner aperture 50.

Under warm conditions, the fuel naturally chooses the warm path 52, easier to follow than the helical groove cold path 54, and flows through the filter mesh 56 retaining particles present in the fuel. The filtered fuel then follows toward the filter outlet 46.

Under cold conditions, the wax contained in the diesel fuel solidifies and clogs the filter mesh 56 that is against the inner face 37 of the wall thus closing the helical groove 62. The warm path through the filter mesh being obstructed, the cold fuel flow is forced to the cold path 54 and it flows following the helical groove 62. Since the flow follows the groove circular direction, the particles heavier than the fuel move under the influence of centrifugal force to the outer periphery of the flow and follow the bottom of the groove and, they naturally enter an ejection slot 68 and the blind chamber 72. Should a particle bypass a first ejection slot 68 and continue in the groove, after one revolution it will most likely enter the next slot 68 or, one of the following slots so that, when exiting the helical groove 62 via the groove outlet 64 and entering the inner space S through the filter mesh aperture 68, the cold fuel is filtered from particles that are trapped by said ejection slots 68 and collected in the blind chamber 72, the flow continuing toward the filter outlet 46. Should final metallic particles remain in the fuel, they are attracted and sticks to the plug and magnetic trap 42.

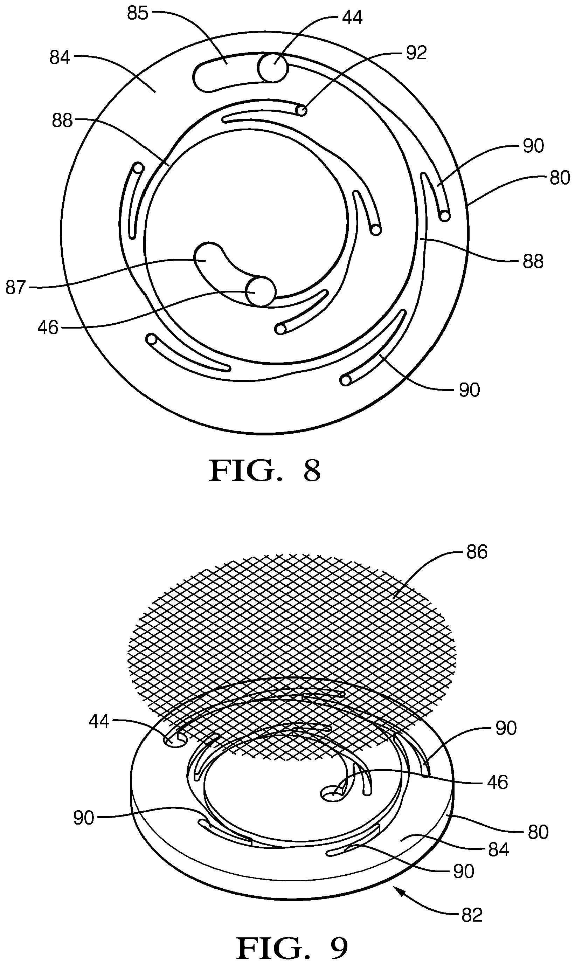

A second embodiment of the diesel fuel 20 filter is now described in reference to the figures 8 and 9. Said second embodiment operates under the same principle wherein, warm fuel naturally follows the easiest path through a fine filter mesh, while cold fuel clogs said fine mesh with wax and must follow a path through a curved groove wherefrom particles are centrifuged and outwardly ejected into blind traps.

Numeral references previously used remain to identify similar features as in the first embodiment.

Said second embodiment of the filter 20 has a body 28 defining an inner space S closed on one side by a wall 80. Said body 28 may have, for instance, a cylindrical peripheral wall closed at an end by a magnetic plug 40, 42 and, at the opposed end by a transverse planar wall 80 represented on the figures. Said wall 80 is provided with the filter inlet 44 and the filter outlet 46 extending through the wall between an outer face 82 and an opposed inner face 84 visible on the figures and oriented inside the inner space S. Also, as represented on the top view of figure 8, the inlet 44 opens on the inner side 84 of the wall 80 in a larger recess having a bean shape and forming an inlet chamber 85 and similarly, the outlet 46 opens in bean shape outlet chamber 87. On said inner face 84, inside the inner space S, is arranged a 50µm, or the like, disc filter mesh 86 of the warm path 52 and, on the wall 80, between said inlet 44 and outlet 46 extends the cold path 54 that takes the form of a spiral groove 88 dug in the inner face 84, said spiral groove 88 being open to the inner space S. As visible on the figures, the filter inlet 44 is arranged at the external extremity of the groove 88, the filter outlet 46 being arranged at the other extremity closer to the center of the wall. Several short grooves 90 having a blind end tangentially extend from the main spiral groove 88 forming auxiliary branches at the end of which may be provided a small collection hollow 92, the particles being trapped and retained in said hollows 92. Although a symmetrical arrangement with inlet close to the center and outlet more on the outskirt is possible, an advantage of this orientation inward orientation is to increase the curvature of the flow path, by reducing the spiral radius, and therefore to increase the likelihood of centrifuging a particle.

The operation of this second embodiment filter 20 is now detailed. Whichever temperature condition is, the diesel fuel enters the filter 20 via the filter inlet 44.

Under warm conditions, the fuel naturally chooses the warm path 52, easier to follow than the spiral groove 88, and flows through the disc filter mesh 86 retaining particles present in the fuel. The filtered fuel then follows toward the filter outlet 46 passing through the disc mesh 86 for a second time. An advantage of said bean shape inlet and outlet chambers 85, 87 is at warm temperature, to enlarge the area through which the fuel flows through the filter mesh 86 and follows the warm path, said enlarged areas favouring the warm path 52 over the spiral groove 88.

Under cold conditions, the wax contained in the diesel fuel solidifies and clogs the disc mesh 86 that is against the inner face 84 of the wall. The open side of the spiral groove is obstructed and, the warm path through the filter mesh being obstructed, the cold fuel is forced to the cold path 54 and it follows the spiral groove 88. Since the flow follows the groove circular direction, the particles heavier than the fuel, move under the influence of centrifugal force, to the outer periphery of the flow and follow the outer side of the groove where they naturally enter an short grooves 90 getting trapped in the blind end or in the collection hollow 92. Should a particle bypass a first short groove 90 and continue in the spiral groove, it will most likely that it will enter the next short groove or, one of the following short grooves so that, when exiting the spiral groove 88 via the filter outlet 46, the cold fuel is filtered from particles trapped by said short grooves 90. Another magnetic trap, not shown, may be arranged to capture metallic particles of said cold fuel flow.

### LIST OF REFERENCES

- S: inner space
- X: filter axis
- H: hollow
- W: warm path arrow
- C: cold path arrow

- 10: pump
- 12: inlet channel
- 14: first branch
- 16: second branch
- 17: another channel
- 18: compression chamber
- 20: diesel fuel filter
- 22: pump body
- 24: bore
- 26: valve inlet
- 28: filter body
- 30: cylindrical wall member
- 32: bottom first end
- 34: top second end
- 35: bottom first annular face
- 36: top second annular face
- 37: inner face of the cylindrical wall - peripheral face of the inner space
- 38: outer face of the cylindrical wall
- 40: plug
- 42: magnetic trap
- 44: filter inlet
- 46: filter outlet
- 48: inlet conduit
- 50: inner aperture
- 52: warm path
- 54: cold path
- 56: filter mesh
- 58: top end of the filter mesh
- 60: bottom end of the filter mesh
- 62: helical groove
- 64: groove outlet
- 66: aperture in the filter mesh
- 68: ejection slot
- 70: opening in the wall outer face
- 72: blind chamber

- 80: wall - 2nd embodiment
- 82: outer face of the planar wall
- 84: inner face of the planar wall
- 85: inlet chamber
- 87: outlet chamber
- 86: disc filter mesh
- 88: spiral groove
- 90: short groove
- 92: collection hollow

## Claims

1. Diesel fuel filter (20) adapted to be arranged upstream the high pressure pump (10) of a fuel injection equipment of an internal combustion engine, said filter (20) having an filter inlet (44) to an filter outlet (46) between which extend a cold path (54) and a warm path (52) wherein, at cold temperature the fuel is filtered in the cold path (54), said cold fuel bypassing the warm path (52) and, at warm temperature the fuel is filtered in the warm path (52), said warm fuel bypassing the cold path (54).

2. Diesel fuel filter (20) as claimed the preceding claim wherein the warm path (52) contains a filter mesh (56, 86) through which, in use, warm fuel flows and particles present in the fuel are trapped.

3. Diesel fuel filter (20) as claimed in any one of the preceding claims wherein, between the filter inlet (44) and the filter outlet (46) the cold path (54) defines a main conduit (62, 88) dividing in a blind branch (68, 72, 90) forming a trap.

4. Diesel fuel filter (20) as claimed in claim 3 wherein the main conduit comprises a curved portion from the outer area of which said blind branch extends.

5. Diesel fuel filter (20) as claimed in any one of the preceding claims wherein the filter has a body (28) comprising peripheral walls enclosing an inner space (S) inside housing the warm path (52), one of the peripheral walls being cylindrical (30) and extending about a filter axis (X) from a first end (32) to an opposed second end (34).

6. Diesel fuel filter (20) claimed in claim 5 taken in combination with claim 2 wherein the filter mesh (56) is cylindrical and is arranged in the inner space (S) against the inner face (37) of the cylindrical wall.

7. Diesel fuel filter (20) as claimed in any of the claims 5 or 6 wherein said main conduit of the cold path is a helical groove (62) dug in the inner face (37) of the cylindrical peripheral wall, so that it is open to said inner space (S), said groove (62) developing around the inner space (S) from an inner aperture (50) arranged in the vicinity of the second end (34) of the cylindrical wall to a groove outlet (64) opening in the inner space(S) and arranged in the vicinity of the first end (32) of the cylindrical wall.

8. Diesel fuel filter (20) as claimed in claim 7 wherein said groove (62) has a cross section semi-circular or triangular or otherwise polygonal, a side of said cross-section opening in the inner space (S).

9. Diesel fuel filter (20) as claimed in any of the claims 7 or 8 wherein the trap comprises an ejection slot (68) opening in the bottom of the helical groove (62) and extending through the cylindrical wall (30) toward an opening (70) in a blind collection chamber (72) partially defined by the outer face (38) of the wall.

10. Diesel fuel filter (20) as claimed in claim 9 further comprising a plurality of said trap (68, 72).

11. Diesel fuel filter (20) as claimed in any of the claims 7 to 10 wherein the filter inlet (44) defines an inlet conduit (48) extending in the cylindrical wall (30) from an outer opening arranged in the vicinity of the first end of the cylindrical wall and through which the fuel enters the filter to, an inner aperture (50) arranged in the vicinity of the second end of the cylindrical wall, the cold path (54) and the warm path (52) joining said inner aperture (50).

12. Diesel fuel filter (20) claimed in the combination of the claims 4, 5 and 6 wherein said filter body (28) comprises a transverse wall (80) wherein the main conduit of the cold path is a groove (88) dug said transverse wall so that it is open to the inner space (S).

13. Diesel fuel filter (20) as claimed in claim 12 wherein the filter inlet (44) and the filter outlet (46) are both provided in said transverse wall (80), said groove (88) having the shape of a flat spiral extending between said filter inlet (44) and outlet (46).

14. Diesel fuel filter (20) as claimed in claim 13 wherein the filter inlet (44) is at the outward end of the spiral (88) and, the filter outlet (46) is at inward end of the spiral.

15. Diesel fuel filter (20) as claimed in any of the claims 13 or 14 wherein said blind branch forming trap is a short groove (90) outwardly diverging from the spiral main groove (88).

16. Diesel fuel filter (20) as claimed in claim 15 comprising a plurality of said short grooves (90) forming traps.

17. Diesel fuel filter (20) as claimed in any of the preceding claims further comprising a magnetic trap (40, 42) for collecting ferrous debris present in the fuel.

18. Diesel fuel filter (20) claimed in claim 17 taken in combination with claim 6 wherein the magnetic trap (40, 42) comprises a member (42) extending in said inner space (S).

19. High pressure fuel pump (10) arranged in a diesel fuel injection equipment to receive low pressure fuel and to deliver pressurised fuel to a high pressure manifold distributing the fuel to injectors, said pump (10) defining a compression chamber (18) wherein low pressure fuel enters via an inlet orifice controlled by an inlet valve and wherefrom pressurised fuel is expelled via an outlet orifice controlled by an outlet valve, said pump (10) further comprising a diesel fuel filter (20) as set in any one of the preceding claims, said diesel fuel filter (20) being fixed on an outer face of the body of the pump just upstream the inlet orifice.
